# FASCICULE DE BREVET EUROPEEN

(11) **EP 0 340 111 B1**
(45) Date de publication et mention de la délivrance du brevet: **22.12.1993**
(21) Numéro de dépôt: 89401199.8
(22) Date de dépôt: 27.04.1989
(51) Int. Cl.: F16K 31/383

(54) **Vanne différentielle à déclencheur pour circuit de fluide sous pression**
Differential-Auslöseventil für Leitungen von Flüssigkeiten unter Druck
Triggered differential valve for a pressurized-fluid circuit

(30) Priorité: 27.04.1988 FR 8805594; 27.04.1988 FR 8805595
(43) Date de publication de la demande: 02.11.1989
(73) Titulaire: Détection Incendie Sécurité Système d'Extinction (DISSE), S.A., F-60300 Senlis (FR)
(72) Inventeur: Deborde, Maurice, F-60300 Senlis (FR)
(74) Mandataire: Chambon, Gérard

(56) Documents cités:
- DE-A- 2 623 587
- FR-A- 2 537 689
- GB-A- 2 123 531
- US-A- 3 860 073
- US-A- 4 073 464

## Description

L'invention concerne une vanne différentielle à déclencheur pour circuit de fluide sous pression, notamment destinée au vidage de réservoirs sous pression, tels que par exemple les citernes ou réservoirs des systèmes d'extinction d'incendie.

Les vannes connues de ce type comportent essentiellement un corps muni de deux orifices, respectivement de branchement sur le circuit ou réservoir et de sortie du fluide. L'orifice de branchement forme alors un siège sur lequel s'applique un clapet solidaire d'un piston de section supérieure à celle du clapet et qui est monté de manière coulissante et étanche dans ledit corps, pour pouvoir se mouvoir axialement par rapport audit orifice de branchement. La face supérieure du piston et la paroi interne du corps de la vanne constituent une chambre dite d'expansion pour les raisons évoquées ci-après.

Toujours dans ce type de vanne connue, un canal de faible section est ménagé au travers de l'ensemble clapet/piston pour déboucher dans la chambre précitée de manière à transmettre la pression du fluide sur la face supérieure du piston, opposée audit clapet.

Du fait de la différence des sections entre le clapet et le piston, la pression exercée sur ledit piston est supérieure à celle exercée sur le clapet qui reste ainsi appliqué sur son siège, en assurant la fermeture de la vanne lorsque celle-ci est bien sûr branchée sur un circuit sous pression, l'orifice de sortie ne communiquant pas dans cette position, avec l'orifice de branchement.

Une vanne de ce type est par exemple divulgué par le document FR-A-2 537 689.

La chambre d'expansion peut communiquer avec l'extérieur par un ajutage de décompression de section supérieure au canal de mise sous pression précité, cet ajutage étant fermé en position normale, généralement par l'obturateur d'un déclencheur.

La mise à l'atmosphère de la chambre par manoeuvre de l'obturateur du déclencheur, provoque l'ouverture immédiate du clapet, sous l'effet de la décompression, et par conséquent, l'écoulement du fluide par l'orifice de sortie, lequel communique alors avec l'orifice de branchement.

Un déclencheur classique comporte généralement un obturateur destiné à venir fermer un ajutage de décompression de la chambre d'expansion. Cet obturateur se présente, par exemple, sous la forme d'un opercule prévu pour être détruit à volonté par une aiguille de percussion, ou par une surpression créée sur ledit opercule.

Par ailleurs, les réservoirs sous pression doivent être protégés contre les surpressions accidentelles internes par un dispositif à ouverture automatique tel par exemple qu'un opercule prévu pour éclater sous une certaine pression.

Jusqu'à présent, il était nécessaire de prévoir deux dispositifs.

L'inventeur a imaginé un déclencheur qui permet d'assurer à la fois le dégazage en cas de surpression et le déclenchement commandé de la vanne. Une vanne selon l'invention comporte donc de manière connue un corps muni d'un orifice de branchement sur le circuit et d'un orifice de sortie pour le fluide, tandis qu'un piston muni d'un canal est monté coulissant dans ledit corps, l'une de ses extrémités étant solidaire d'un clapet ou formant un clapet et son autre extrémité constituant l'une des parois d'une chambre d'expansion qui peut être mise à l'atmosphère au moyen du déclencheur, ledit clapet étant aménagé pour venir fermer ou ouvrir la communication entre l'orifice de sortie du fluide et l'orifice de branchement, tandis que ce dernier communique en position fermée de la vanne avec la chambre d'expansion au moyen du canal du piston de manière à assurer dans cette position, une pression dans ladite chambre sensiblement égale à celle du circuit et que le déclencheur comporte un obturateur destiné à venir fermer un ajutage de décompression de la chambre d'expansion. Cette vanne est notamment remarquable en ce que l'obturateur dudit déclencheur forme une soupape qui est montée mobile dans un corps et il est sollicité à venir fermer l'ajutage de décompression de la chambre d'expansion par un moyen élastique taré, tandis qu'un moyen d'actionnement est prévu pour déplacer ledit obturateur à l'encontre dudit moyen élastique, de telle sorte que le déclencheur peut commander l'ouverture de la vanne à l'aide du moyen d'actionnement ou automatiquement en cas d'une surpression dans la chambre d'expansion supérieure à la pression de tarage du moyen élastique.

Le moyen de commande comporte, par exemple, un moyen de traction mécanique solidaire de l'obturateur.

Selon un mode de réalisation préféré, comportant ou non le moyen de commande précité, l'obturateur est solidaire d'un piston qui est sollicité par le moyen élastique et qui est monté coulissant dans le corps du déclencheur en formant une chambre à volume variable, tandis qu'un moyen de commande de surpression débouche dans ladite chambre, de manière à assurer une ouverture de l'obturateur du déclencheur par mise en surpression de la chambre à une pression supérieure à la pression de tarage du moyen élastique.

Dans les vannes connues, lorsqu'on en branche une sur un réservoir, le remplissage et la mise sous pression de ce dernier sont effectués par une vanne ou un clapet distinct de la vanne précitée. En outre le joint torique, dont le piston est nécessairement muni pour assurer l'étanchéité, se déforme de manière importante et de façon diférente selon les pressions exercées et les mouvements du piston, en créant un risque de blocage.

Selon un mode de réalisation avantageux, l'invention permet entre autre d'effectuer alternativement au choix, les fonctions de vidage et de remplissage du réservoir et supprime les inconvénients dûs au joint du piston.

Pour atteindre ces objectifs, l'inventeur a imaginé d'inverser les orifices de branchement et de sortie, de manière à conférer au clapet un véritable rôle de soupape qui autorise l'inversion du sens d'écoulement du fluide lors du remplissage. Toutefois, une adaptation des moyens permet de conserver le principe de fonctionnement différentiel et convient tout particulièrement au déclencheur précité.

Selon ce mode de réalisation, l'orifice de sortie est ménagé dans le corps de la vanne perpendiculairement à l'axe de l'orifice du branchement, mais axialement par rapport à l'axe dudit corps, tandis que le canal qui traverse le piston est sensiblement axial et excentré pour déboucher, d'une part, dans la chambre d'expansion et, d'autre part, dans un évidement qui communique avec l'orifice de branchement en position fermée de la vanne de telle sorte que le clapet permet d'obturer ou ouvrir l'orifice de sortie.

Dans ce cas, il est avantageux que l'évidement de communication entre la chambre d'expansion et l'orifice de branchement soit constitué par l'espace libre du corps, laissé par un élément de liaison disposé entre le piston et le clapet, et dont le diamètre est inférieur à celui du piston. Toutefois, il pourrait s'agir aussi d'une gorge annulaire périphérique ménagée dans un piston de diamètre constant et formant clapet par l'une de ses extrémités, ou encore un canal radial perpendiculaire au premier canal qui pourrait même, dans ce cas, être central.

De préférence, le clapet est pourvu d'un joint torique frontal disposé à distance de la paroi latérale dudit clapet pour former entre cette dernière et ledit joint, une surface annulaire soumise à la pression du fluide en position fermée de la vanne.

Le corps de la vanne, presente, par exemple, un épaulement intérieur qui délimite deux parties de diamètres intérieurs différents, dans lesquelles coulissent respectivement, le piston dans la plus grande partie et le clapet dans la plus petite partie, les diamètres extérieurs du piston et du clapet étant adaptés en conséquence. Contrairement à l'art connu et selon un mode de réalisation, le piston de la vanne coulisse dans le corps sans moyen d'étanchéité.

De préférence, l'orifice de branchement est prévu pour recevoir un raccord permettant une adaptation sur divers circuits ou réservoirs.

Pour une vanne destinée à venir sur un réservoir de fluide sous pression il est avantageux que l'orifice de sortie soit pourvu d'un raccord fileté destiné au branchement d'un dispositif de remplissage du réservoir et/ou au vissage d'un moyen de bouchage.

Dans ce cas et de préférence, le moyen de bouchage comporte un chapeau écrou destiné à venir se visser sur le raccord de l'orifice de sortie tandis qu'une tige centrale solidaire dudit chapeau est filetée de manière conjuguée à un taraudage de l'extrémité du clapet pour venir s'y visser et verrouiller ainsi l'ensemble piston/clapet dans cette position. Outre un verrouillage, par exemple pour le transport, ce moyen permet aussi un contrôle de bon fonctionnement, comme il sera expliqué ci-après.

Le dispositif de remplissage du réservoir peut être, par exemple, pourvu d'une vanne de mise à l'atmosphère afin de commander la fermeture du clapet après remplissage du réservoir.

L'invention sera bien comprise et d'autres particularités apparaîtront à la lecture de la description qui va suivre et qui se réfère aux dessins annexés dans lesquels:
- la figure 1 montre en coupe axiale une vanne selon l'invention, en position de fermeture,
- la figure 2 montre la vanne en position d'ouverture,
- la figure 3 montre la même vanne en cours de remplissage.

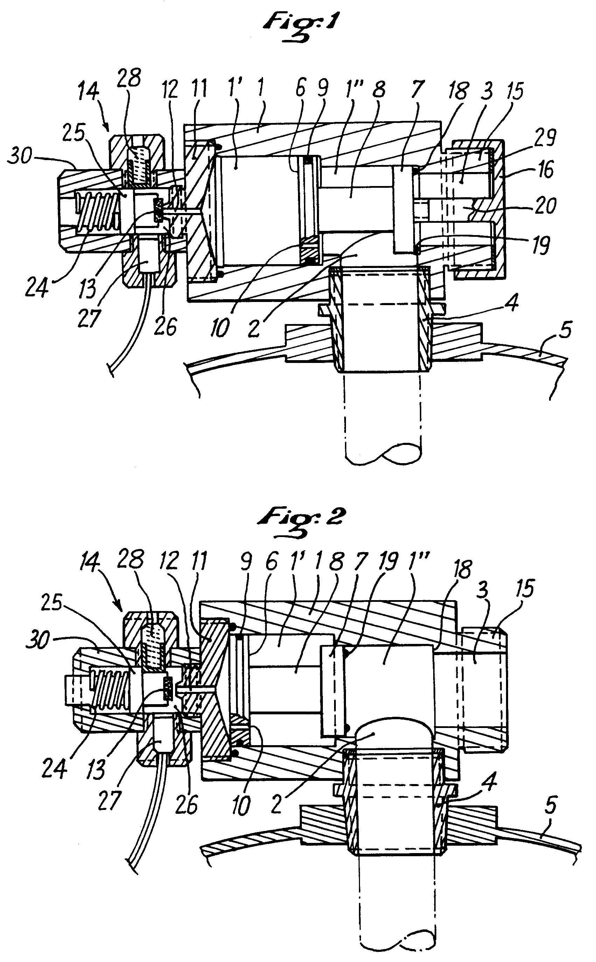

La vanne montrée sur les figures 1 à 3 comporte un corps 1 muni d'un orifice de branchement 2 et d'un orifice de sortie 3 dont l'axe est sensiblement perpendiculaire à l'axe dudit orifice 2.

L'orifice 2 est muni d'un raccord 4 pour le branchement sur un circuit sous pression, ici un réservoir 5 représenté en partie.

Le corps 1 présente un épaulement intérieur qui délimite deux parties respectivement 1' et 1'' de diamètres intérieurs différents.

Dans la partie 1' de plus grand diamètre, est monté de manière coulissante un piston 6 qui est solidaire d'un clapet 7 par l'intermédiaire d'une tige de liaison 8.

Comme le montrent bien les dessins, le clapet 7 d'un diamètre inférieur à celui du piston 6 (ce qui n'est pas obligatoire), coulisse dans la partie 1'' du corps. Par ailleurs, si le piston 6 est pourvu, comme représenté, d'un élément périphérique 9, celui-ci n'est pas nécessairement destiné à assurer une étanchéité qui n'est pas obligatoire, contrairement à l'art connu, mais plutôt à améliorer le coulissement.

Le piston 6 est en outre pourvu d'un canal axial 10 excentré qui débouche au voisinage de la tige de liaison 8.

Le corps 1 est fermé à son extrémité opposée à l'orifice 3 par un bouchon 11 vissé dans ledit corps, sa dépose permettant notamment de retirer le piston et de vérifier l'état de celui-ci ou l'état de l'intérieur du corps 1.

Le bouchon 11 est pourvu d'un ajutage 12 qui peut être fermé (figure 1) ou non (figure 2) par l'obturateur 13 d'un déclencheur 14 dont il sera question plus en détail ci-après.

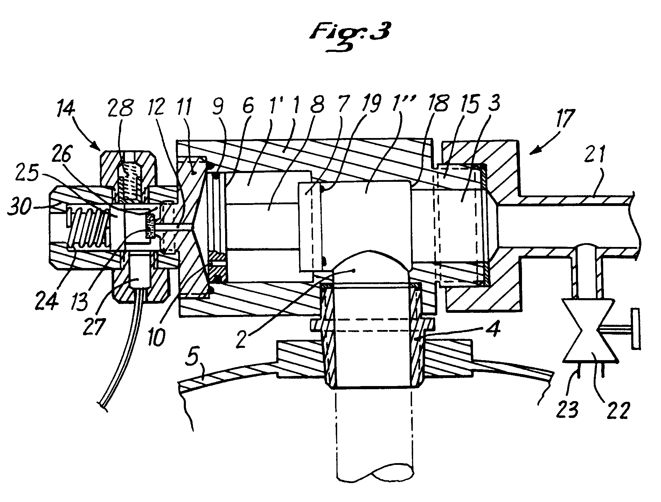

L'orifice de sortie 3 est muni d'un raccord fileté 15 destiné à recevoir, soit un moyen de bouchage sous forme d'un chapeau écrou 16 (figure 1), soit un dispositif de remplissage 17 (figure 3).

L'orifice 3 présente un diamètre d'ouverture qui est inférieur au diamètre intérieur de la partie 1' du corps 1 et forme un épaulement intérieur 18, tandis que la face frontale du clapet 7 tournée vers ledit orifice est munie d'un joint torique 19 aménagé à distance de la paroi latérale dudit clapet et donc de la paroi interne du corps 1, mais à distance suffisante du centre pour pouvoir venir prendre appui sur l'épaulement 18. Toutefois, l'étanchéité du clapet 7 peut être obtenue autrement, grâce à une matière et un usinage particulier dudit clapet.

La partie 1′ du corps 1 forme avec la face du piston 6 qui est opposée à l'orifice 3, et avec le bouchon 11, une chambre dite d'expansion et référencée aussi 1′.

En position fermée représentée sur la figure 1, la pression du fluide du réservoir 5 est transmise à la chambre 1′ via le canal 10 (l'ajutage 12 étant fermé par l'obturateur 13), de telle sorte que le clapet 7 s'applique de manière étanche sur l'épaulement 18. La pression de fluide peut se transmettre également par la périphérie du piston 6, lorsque l'élément 9 n'est pas, comme déjà dit, un joint d'étanchéité.

Dans cette position, notamment pour le transport, l'orifice 3, bien qu'obturé par le clapet 7, peut être fermé par le chapeau écrou 16, ce dernier étant en outre pourvu d'une tige filetée 20 destinée à venir en prise avec un taraudage conjugué ménagé dans le clapet 7, de manière à verrouiller ce dernier en position fermée.

En position de fonctionnement, chapeau 16 retiré, il suffit que l'obturateur 13 du déclencheur 14 s'ouvre comme le montre la figure 2, pour que la chambre 1′ soit mise à l'atmosphère de la manière décrite plus loin. La décompression de la chambre 1′ entraîne la brusque ouverture de la vanne, par la pression du fluide exercée sur le piston et sur la surface annulaire comprise entre le joint torique 19 et la paroi interne de la partie 1'' du corps 1.

Dans cette position ouverte (figure 2), il est clair que le fluide peut s'écouler par l'orifice 3 jusqu' au vidage complet du réservoir 5.

Contrairement à l'art connu, la vanne selon l'invention permet le remplissage du réservoir après une utilisation ou avant son premier usage, au moyen d'un dispositif du type de celui représenté en 17 sur la figure 3.

Le dispositif 17 vient se visser sur le raccord 15, le tube 21 dont il est muni étant relié à un conteneur ou circuit de fluide à charger.

Pour le remplissage, l'obturateur 13 est bien sûr en position fermée.

Lorsque le réservoir 5 est rempli et contient son agent de pression, il suffit d'actionner une vanne trois voies 22 qui permet par son conduit 23, de mettre le conduit 21 et donc la partie 1˝ du corps 1 à l'air libre. La décompression ainsi pratiquée en aval du clapet 7 provoque la brusque fermeture de celui-ci et l'on se retrouve dans la position de la figure 1, le chapeau 16 étant ou non momentanément revissé à la place du dispositif 17.

La vanne qui vient d'être décrite est donc commandée par un déclencheur, tel le déclencheur 14 représenté sur les dessins, lequel est particulièrement bien adapté et présente de nombreux avantages.

L'obturateur 13 du déclencheur est monté mobile dans un corps 30 et il est sollicité à venir fermer l'ajutage 12 du bouchon 11 par un ressort 24 taré, de manière que ledit obturateur 13 fasse fonction de soupape de sécurité en cas de surpression dans le réservoir 5.

En outre, l'obturateur 13 peut bien sûr être commandé volontairement pour assurer l'ouverture de la vanne et il est pourvu d'un moyen d'actionnement. Le moyen d'actionnement de l'obturateur 13 peut, notamment, être mécanique, sous forme d'un moyen de traction (non représenté) tel un câble, anneau, ou similaire, fixé audit obturateur et faisant saillie à l'extérieur du corps 30, ce moyen d'actionnement étant destiné à le solliciter à l'encontre du moyen élastique 24.

Selon un mode de réalisation préférentiel, l'obturateur 13 est solidaire d'un piston 25 qui est monté coulissant de manière étanche dans le corps 30 du déclencheur. Comme le montrent les dessins, c'est l'ensemble piston 25/obturateur 13 qui est sollicité par le ressort 24, en formant une chambre 26 à volume variable.

Dans la chambre 26, débouche un moyen de commande de surpression 27, lequel peut être une source de gaz comprimé, une cartouche pyrotechnique de gaz ou tout autre moyen connu. Ce moyen de commande permet de créer une pression dans la chambre 26, qui est supérieure à la pression de tarage du ressort 24, de manière à entraîner l'ouverture de l'obturateur 13 en agissant sur le piston 25, des évents étant éventuellement prévus dans le corps 30 si les fuites naturelles dans ledit corps du déclencheur s'avéraient insuffisantes,pour faciliter la détente de la chambre d'expansion 1′ de la vanne par l'ajutage 12.

Par ailleurs, un moyen de verrouillage 28 est prévu pour maintenir le déclencheur en position ouverte. Les figures montrent un moyen 28 pourvu d'un doigt qui vient bloquer élastiquement le piston 25 (figure 2) après l'ouverture de l'obturateur 13, sa remise en position de déverrouillage étant par exemple obtenue par dévissage.

La vanne selon l'invention permet en outre un contrôle complet de fonctionnement avec perte minimale d'agent de pression.

Dans la position de la figure 1 (vanne verrouillée), on peut faire un premier essai en commandant l'ouverture de l'obturateur 13 du déclencheur pour vérifier, par les fuites constatées, que les divers canaux sont bien débouchés.

En outre, comme le montre la figure 1, le chapeau 16 est muni d'un joint 29 qui permet d'effectuer le test suivant.

A partir de la position de la figure 1, chapeau 16 serré, on desserre légèrement ce dernier et on ouvre l'obturateur 13. Si le joint 19 du clapet 7 n'est pas collé, et si tout fonctionne bien, la vanne a tendance à s'ouvrir et on doit constater une ouverture brusque mais limitée, le chapeau 16 venant alors en butée sur le raccord 15 de l'orifice 3, avec perte minimale de fluide ou d'agent de pression grâce au joint 29. Le blocage du chapeau 16 est donc un signe de bon fonctionnement, et il suffit ensuite de resserrer le chapeau 16 pour revenir dans la position de la figure 1.

Ceci est particulièrement utile pour les systèmes de sécurité, lors des essais périodiques de fonctionnement puisqu'il n'est pas nécessaire de vider complètement le réservoir 5 pour constater le bon fonctionnement de la vanne.

## Revendications

1. Vanne différentielle à déclencheur (14) pour circuit de fluide sous pression, comportant un corps (1) muni d'un orifice de branchement (2) sur le circuit et d'un orifice de sortie (3) pour le fluide, tandis qu'un piston (6) muni d'un canal (10) est monté coulissant dans ledit corps, l'une de ses extrémités étant solidaire d'un clapet (7) ou formant un clapet (7) et son autre extrémité constituant l'une des parois d'une chambre d'expansion (1') qui peut être mise à l'atmosphère au moyen du déclencheur (14), ledit clapet (7) étant aménagé pour venir fermer ou ouvrir la communication entre l'orifice de sortie (3) du fluide et l'orifice de branchement (2), tandis que ce dernier communique en position fermée de la vanne avec la chambre d'expansion (1') au moyen du canal (10) du piston (6) de manière à assurer dans cette position, une pression dans ladite chambre sensiblement égale à celle du circuit et que le déclencheur (14) comporte un obturateur (13) destiné à venir fermer un ajutage (12) de décompression de la chambre d'expansion (1'), vanne caractérisée en ce que l'obturateur (13) dudit déclencheur (14) forme une soupape qui est montée mobile dans un corps (30) et il est sollicité à venir fermer l'ajutage (12) de décompression par un moyen élastique (24) taré, tandis qu'un moyen d'actionnement est prévu pour déplacer ledit obturateur à l'encontre dudit moyen élastique, de telle sorte que le déclencheur peut commander l'ouverture de la vanne à l'aide du moyen d'actionnement ou automatiquement en cas d'une surpression dans la chambre d'expansion (1') supérieure à la pression de tarage du moyen élastique (24).

2. Vanne selon la revendication 1, caractérisée en ce que le moyen d'actionnement comporte un moyen de traction mécanique solidaire de l'obturateur (13).

3. Vanne selon l'une des revendications 1 et 2, caractérisée en ce que l'obturateur (13) est solidaire d'un piston (25) qui est sollicité par le moyen élastique (24) et qui est monté coulissant dans le corps (30) du déclencheur (14) en formant une chambre (26) à volume variable, tandis qu'un moyen de commande de surpression (27) débouche dans ladite chambre (26), de manière à assurer une ouverture de l'obturateur (13) du déclencheur par mise en surpression de la chambre (26) à une pression supérieure à la pression de tarage du moyen élastique (24).

4. Vanne selon l'une des revendications 1 à 3, caractérisée en ce que l'orifice de sortie (3) est ménagé dans le corps (1) de la vanne perpendiculairement à l'axe de l'orifice (2) de branchement, mais axialement par rapport à l'axe dudit corps (1), tandis que le canal (10) qui traverse le piston (6) est sensiblement axial et excentré pour déboucher, d'une part, dans la chambre d'expansion (1') et, d'autre part, dans un évidement qui communique avec l'orifice de branchement (2) en position fermée de la vanne de telle sorte que le clapet (7) permet d'obturer ou ouvrir l'orifice de sortie (3).

5. Vanne selon la revendication 4, caractérisée en ce que l'évidement de communication entre la chambre d'expansion (1') et l'orifice de branchement (2) est constitué par l'espace libre du corps (1), laissé par un élément de liaison (8) disposé entre le piston (6) et le clapet (7), et dont le diamètre est inférieur à celui du piston.

6. Vanne selon l'une des revendications 1 à 5, caractérisée en ce que le clapet (7) est pourvu d'un joint torique frontal (19) disposé à distance de la paroi latérale dudit clapet pour former entre cette dernière et ledit joint, une surface annulaire soumise à la pression du fluide en position fermée de la vanne.

7. Vanne selon l'une des revendications 1 à 6, caractérisée en ce que le corps (1) de la vanne présente un épaulement intérieur qui délimite deux parties de diamètres intérieurs différents, dans lesquelles coulissent respectivement, le piston (6) dans la plus grande partie et le clapet (7) dans la plus petite partie, les diamètres extérieurs du piston et du clapet étant adaptés en conséquence.

8. Vanne selon l'une quelconque des revendications 1 à 7, caractérisée en ce que le piston (6) de la vanne coulisse dans le corps (1) sans moyen d'étanchéité.

9. Vanne selon l'une des revendications 1 à 8, caractérisée en ce que l'orifice de branchement (2) est prévu pour recevoir un raccord (4) permettant une adaptation sur divers circuits ou réservoirs.

10. Vanne selon l'une des revendications 4 à 9, pour réservoir (5) de fluide sous pression, caractérisée en ce que l'orifice de sortie (3) est pourvu d'un raccord fileté (15) destiné au branchement d'un dispositif de remplissage (17) du réservoir et/ou au vissage d'un moyen de bouchage (16).

11. Vanne selon la revendication 10, caractérisée en ce que le moyen de bouchage comporte un chapeau écrou (16) destiné à venir se visser sur le raccord (15) de l'orifice de sortie (3) tandis qu'une tige centrale (20) solidaire dudit chapeau (16) est filetée de manière conjuguée à un taraudage du clapet (7) pour venir s'y visser et verrouiller ainsi l'ensemble piston (6)/clapet (7) dans cette position.

12. Vanne selon l'une des revendications 10 et 11, caractérisée en ce que le dispositif de remplissage (17) du réservoir (5) est pourvu d'une vanne (22) de mise à l'atmosphère afin de commander la fermeture du clapet (7) après remplissage du réservoir.

## Claims

1. Differential valve with a trigger (14) for a pressurized fluid circuit, comprising a body (1) provided with a connecting orifice (2) to the circuit and an outlet orifice (3) for the fluid, while a piston (6) provided with a channel (10) is fitted slidingly in said body, one of its ends being integral with a flap (7) or forming a flap (7) and its other end constituting one of the walls of an expansion chamber (1') which can be vented to the atmosphere by means of the trigger (14), said flap (7) being arranged in order to close or open communication between the outlet orifice (3) for the fluid and the connecting orifice (2), while the latter, in the closed position of the valve, communicates with the expansion chamber (1') by means of the channel (10) of the piston (6) so as to produce in this position a pressure in said chamber substantially equal to that of the circuit, and the trigger (14) comprises an obturator (13) designed to close a passage (12) for decompression of the expansion chamber (1'), said differential valve being characterised in that the obturator (13) of said trigger (14) forms a valve which is fitted movingly in a body (30) and it is drawn to close the decompression passage (12) by a calibrated elastic means (24), while an actuating means is provided to move said obturator against said elastic means, such that the trigger can initiate the opening of the valve with the aid of the actuating means or automatically in the event of a pressure in the expansion chamber (1') greater than the calibration pressure of the elastic means (24).

2. Valve according to claim 1, characterised in that the actuating means comprises a mechanical traction means integral with the obturator (13).

3. Valve according to one of claims 1 and 2, characterised in that the obturator (13) is integral with a piston (25) which is drawn by the elastic means (24) and which is fitted slidingly in the body (30) of the trigger (14), forming a chamber (26) of variable volume, while a pressure control means (27) debouches into said chamber (26), so as to ensure opening of the obturator (13) of the trigger when the chamber (26) is pressurised to a pressure greater than the calibration pressure of the elastic means (24).

4. Valve according to one of claims 1 to 3, characterised in that the outlet orifice (3) is formed in the body (1) of the valve perpendicularly to the axis of the connecting orifice (2), but axially in relation to the axis of said body (1), while the channel (10) which passes through the piston (6) is substantially axial and eccentric in order to debouche firstly into the expansion chamber (1') and secondly into a recess which communicates with the connecting orifice (2) in the closed position of the valve so that the flap (7) can block or open the outlet orifice (3).

5. Valve according to claim 4, characterised in that the recess communicating between the expansion chamber (1') and the connecting orifice (2) is constituted by the free space of the body (1), left by a linking element (8) disposed between the piston (6) and the flap (7), and the diameter of which is less than that of the piston.

6. Valve according to one of claims 1 to 5, characterised in that the flap (7) is provided with a frontal o-ring (19) disposed remote from the side wall of said flap in order to form between the latter and said o-ring an annular surface exposed to the pressure of the fluid in the closed position of the valve.

7. Valve according to one of claims 1 to 6, characterised in that the body (1) of the valve exhibits an internal shoulder which delimits two sections of different inside diameters in which slide respectively the piston (6) in the larger section and the flap (7) in the smaller section, the outside diameters of the piston and the flap being adapted accordingly.

8. Valve according to any one of claims 1 to 7, characterised in that the piston (6) of the valve slides in the body (1) without any sealing means.

9. Valve according to one of claims 1 to 8, characterised in that the connecting orifice (2) is designed to receive a connector (4) permitting adaptation to various circuits or tanks.

10. Valve according to one of claims 4 to 9, for a pressurized-fluid tank (5), characterised in that the outlet orifice (3) is provided with a threaded connector (15) designed for connection of a filling device (17) for the tank and/or screwing on a plugging means (16).

11. Valve according to claim 10, characterised in that the plugging means comprises a cap nut (16) designed to be screwed on to the connector (15) of the outlet orifice (3) while a central rod (20) integral with said cap (16) is threaded so as to match a tapping of the flap (7) in order to be screwed into it and thus lock the assembly of the piston (6)/flap (7) in this position.

12. Valve according to one of claims 10 and 11, characterised in that the filling device (17) of the tank (5) is provided with a valve (22) for venting to the atmosphere in order to initiate the closure of the flap (7) after filling of the tank.

## Patentansprüche

1. Differential-Auslöseventil (14) für einen unter Druck stehenden Fluidkreis mit einem Körper (1), der mit einer Abzweigöffnung (2) zum Kreis und einer Auslaßöffnung (3) für das Fluid versehen ist, wobei ein einen Kanal (10) aufweisender Kolben (6) verschiebbar in diesem Körper angeordnet ist und das eine seiner Enden mit einem Verschlußkörper (7) verbunden ist oder einen Verschlußkörper (7) bildet und sein anderes Ende eine der Wände einer Expansionskammer (1') bildet, die durch den Auslöser (14) mit der Atmosphäre verbindbar ist, und das Verschlußstück (7) angeordnet ist, um die Verbindung zwischen Auslaßöffnung (3) für das Fluid und Abzweigöffnung (2) zu schließen oder zu Öffnen, und letztere in der Schließposition des Ventils mit der Expansionskammer (1') mittels des Kanals (10) des Kolbens (6) derart zusammenwirkt, daß in dieser Position ein Druck in dieser Kammer vorhanden ist, der etwa gleich dem des Kreises ist, und daß der Auslöser (14) einen Verschluß (13) aufweist, der dazu dient, eine Dekompressions-Leitung (12) der Expansionskammer (1) zu schließen, dadurch gekennzeichnet, daß der Verschluß (13) des Auslösers (14) ein Ventil bildet, das beweglich in einem Körper (30) angebracht ist, und in Richtung des Verschließens der Dekompressions-Leitung (12) durch ein Ausgleichsfedermittel (24) beaufschlagt ist, und ein Betätigungsmittel vorgesehen ist, um den Verschluß entgegen der Wirkung des Federmittels derart zu verschieben, daß der Auslöser die Öffnung des Ventils durch das Betätigungsmittel oder automatisch im Fall eines Überdrucks in der Expansionskammer (1') bewirken kann, der größer ist als der Ausgleichsdruck des Federmittels (24).

2. Ventil gemäß Anspruch 1, dadurch gekennzeichnet, daß das Betätigungssmittel ein mit dem Verschluß (13) verbundenes mechanisches Zugmittel aufweist.

3. Ventil gemäß einem der Ansprüche 1 und 2, dadurch gekennzeichnet, daß der Verschluß (13) mit einem Kolben (25) verbunden ist, der durch das Federmittel (24) beaufschlagt und verschiebbar im Körper (30) des Auslösers (14) angeordnet ist und dabei eine Kammer (26) mit variablem Volumen bildet, wobei ein Überdruck-Betätigungsmittel (27) in der Kammer (26) mündet derart, daß ein Öffnen des Verschlusses (13) des Auslösers durch einen Überdruck in der Kammer (26) bewirkt, der größer ist als der Ausgleichsdruck des Federmittels (24).

4. Ventil gemäß einem der Ansprüche 1 bis 3, dadurch gekennzeichnet, daß die Auslaßöffnung (3) im Ventilkörper (1) senkrecht zur Achse der Abzweigöffnung (2) angeordnet ist, jedoch axial in Bezug auf die Achse des Körpers (1), während der Kanal (10), der den Kolben (6) durchquert, im wesentlichen axial und exzentrisch ist, um einerseits in der Expansionskammer (1') und andererseits in einer Ausnehmung zu münden, die in Schließstellung des Ventils mit der Abzweigöffnung in Verbindung ist derart, daß der Verschlußkörper (7) ein Schließen oder Öffnen der Auslaßöffnung (3) ermöglicht.

5. Ventil gemäß Anspruch 4, dadurch gekennzeichnet, daß die Verbindungsausnehmung zwischen der Expansionskammer (1') und die Abzweigöffnung (2) durch den Raum des Körpers (1) gebildet wird, der durch ein Verbindungselement (8) freigelassen wird, welches zwischen dem Kolben (6) und dem Verschlußkörper (7) angeordnet ist und dessen Durchmesser kleiner ist als der des Kolbens.

6. Ventil gemäß einem der Ansprüche 1 bis 5, dadurch gekennzeichnet, daß der Verschlußkörper (7) mit einem stirnseitigen Dichtring (19) versehen ist, der in einem Abstand von der Seitenwand des Verschlußkörpers (7) angeordnet ist, um zwischen letzterer und dem Ring eine ringförmige Oberfläche zu bilden, die in der Schließposition des Ventils unter der Einwirkung des Druckfluids steht.

7. Ventil gemäß einem der Ansprüche 1 bis 6, dadurch gekennzeichnet, daS der Ventilkörper (1) eine Innenschulter aufweist, die zwei Teile mit unterschiedlichen Innendurchmessern begrenzt, in denen der Kolben (6) in dem größeren Teil bzw. der Verschlußkörper (7) in dem kleineren Teil gleitet, wobei die Außendurchmesser des Kolbens und des Verschlußkörpers entsprechend angepaßt sind.

8. Ventil gemäß einem der Ansprühe 1 bis 7, dadurch gekennzeichnet, daß der Kolben (6) des Ventils im Körper (1) ohne Abdichtungsmittel gleitet.

9. Ventil gemäß einem der Ansprüche 1 bis 8, dadurch gekennzeichnet, daß die Abzweigöffnung (2) so ausgebildet ist, daß sie ein Verbindungsteil (4) aufnehmen kann, welches eine Anpassung an verschiedene Kreise oder Behälter ermöglicht.

10. Ventil gemäß einem der Ansprüche 4 bis 9 für einen Unterdruck stehenden Behälter (5) für ein Fluid, dadurch gekennzeichnet, daß die Auslaßöffnung (3) mit einem ein Gewinde aufweisenden Verbindungsteil (15) versehen ist, welches zum Anschließen einer Vorrichtung (17) zum Füllen des Behälters und/oder zum Aufschrauben eines Verschlußmittels (16) dient.

11. Ventil gemäß Anspruch 10, dadurch gekennzeichnet, daß das Verschlußmittel eine Schraubkappe (16) aufweist, die auf das Verbindungsstück (15) der Auslaßöffnung (3) aufschraubbar ist, und eine zentrale Stange (20), die mit der Kappe (16) verbunden ist, mit einem Gewinde versehen ist, das an ein Innengewinde des Verschlußkörpers (7) angepaßt ist und dort einschraubbar ist, um die Einheit Kolben(6)/Verschlußkörper(7) in dieser Position zu verriegeln.

12. Ventil gemäß einem der Ansprüche 10 und 11, dadurch gekennzeichnet, daß die Vorrichtung (17) zum Füllen des Behälters (5) mit einem Ventil (22) zur Herstellung einer Verbindung mit der Atmosphäre versehen ist, um das Schließen des Verschlußkörpers (7) nach dem Füllen des Reservoirs zu bewirken.
